Europäisches Patentamt

European Patent Office

Office européen des brevets

(11) Veröffentlichungsnummer: **0 191 871**
**B1**

(12) # EUROPÄISCHE PATENTSCHRIFT

(45) Veröffentlichungstag der Patentschrift:
**18.01.89**

(21) Anmeldenummer: **84114374.6**

(22) Anmeldetag: **28.11.84**

(51) Int. Cl.⁴: **A 01 B 49/06,** A 01 C 5/06,
A 01 C 7/08

(54) **Bestellmaschine.**

(43) Veröffentlichungstag der Anmeldung:
**27.08.86 Patentblatt 86/35**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**DE-A- 2 016 231**
**FR-A- 2 499 815**

(73) Patentinhaber: **Kirchberger, Franz, Lichtenfelser Strasse 43, D-8623 Staffelstein (DE)**

(72) Erfinder: **Kirchberger, Franz, Lichtenfelser Strasse 43, D-8623 Staffelstein (DE)**

(74) Vertreter: **LOUIS, PÖHLAU, LOHRENTZ & SEGETH, Kesslerplatz 1 Postfach 3055, D-8500 Nürnberg (DE)**

# Beschreibung

Die Erfindung betrifft eine Bestellmaschine mit einer Scharsävorrichtung mit mindestens einer Reihe nebeneinander angeordneter Säschare und einer der Scharsävorrichtung vorlaufenden Bodenverdichtungsvorrichtung.

Es sind Rillensämaschinen bekannt, die in erster Linie auf formbaren Böden eingesetzt werden. Bei den Rillensämaschinen werden mit Hilfe von Rädern Rillen im Boden geschaffen, in die das Saatgut über nachfolgende scharlose Särohrausgänge abgelegt wird. Da also bei einer derartigen Maschine die Rillen oder Furchen im Boden für die Ablage des Saatgutes nicht durch unmittelbar an den Särohren befestigte saatgutführende Säschare, sondern mit Hilfe von saatlosen Walzenrädern erzeugt werden, muss die mit den Walzen geschaffene Öffnung des Bodens mindestens so lange erhalten bleiben, bis das Saatgut in der Rille abgelegt ist. In der Mehrzahl der Fälle sind aber solche Bodenverhältnisse nicht gegeben. Ferner kann die Rillensämaschine nur mit konstanter Sätiefe arbeiten. Das Spektrum der idealen Ablagetiefe ist aber bei den unterschiedlichen Saatgütern sehr gross.

Diese bei den Rillensämaschinen auftauchenden Schwierigkeiten werden mit Bestellmaschinen der eingangs genannten Art vermieden. Eine solche ist beispielsweise aus DE-A-3 105 656 bekannt. Sie eignen sich aufgrund der Verwendung von Säscharen, die am Ende der Särohre befestigt sind und im Boden die Furchen schaffen, in die das Saatgut unmittelbar nach Öffnung des Bodens abgelegt wird, für alle Bodenverhältnisse, insbesondere auch dann, wenn eine Verformung der Bodenoberfläche nicht erhalten bleibt. Auch kann bei einer solchen Bestellmaschine die Kornablagetiefe den unterschiedlichen Saatgütern gezielt angepasst werden. Deshalb sind die Bestellmaschinen dieser Art vielseitiger verwendbar und weiter verbreitet als die Rillensämaschinen.

Um einen Schlupf der Bodenverdichtungswalze zu verhindern, also auszuschliessen, dass die Bodenverdichtungswalze ohne Drehung oder mit wenig Drehung über den Boden geschleift wird, so dass sie wie ein Räumwerkzeug auf den zu bearbeitenden Boden einwirkt, sind bei der Bodenverdichtungswalze gemäss DE-A-3 105 656 Zacken oder Stacheln auf ihrem Umfang angeordnet, die sicherstellen, dass die Bodenverdichtungswalze nahezu schlupffrei abrollt.

Die bekannten Bestellmaschinen der eingangs genannten Art weisen aber auch Nachteile auf. Um den Boden — besonders bei gelockerten Böden — vor Einbringung des Saatgutes verdichten zu können, damit die Feuchtigkeit im Boden erhalten bleibt und von unten kapillar aufsteigen kann, ist bei der eingangs bekannten Bestellmaschine die der Scharsävorrichtung vorlaufende Bodenverdichtungsvorrichtung vorgesehen, die nach dem Stand der Technik aus einer Walze mit einer quer zur Fahrtrichtung weitgehend gleichmässig auf dem Boden aufliegenden Mantelfläche besteht. Die dadurch erzielte gleichmässige und breitflächige Verdichtung des Bodens birgt aber wegen der Zerstörung der Bodenstruktur die Gefahr des Verschlämmens in sich, durch die das Wachstum der Pflanze behindert wird. Ausserdem baut sich beim Walzen der Boden auf der gesamten Arbeitsbreite auf, was zu einer Blockierung der Walze führt, die dann nicht mehr rollt sondern schiebt.

Der Erfindung liegt nun die Aufgabe zugrunde, eine Bestellmaschine der eingangs genannten Art derart auszubilden, dass die Gefahr eines Verschlämmens des Bodens gemindert und insgesamt das Pflanzenwachstum gefördert wird.

Diese Aufgabe wird erfindungsgemäss dadurch gelöst, dass die Bodenverdichtungsvorrichtung im Abstand der nachlaufenden Säschare und mit diesen in Fahrtrichtung fluchtend angeordnete, vorzugsweise auf einer gemeinsamen Achse geführte Bodenverdichtungswerkzeuge aufweist zur Ausbildung von voneinander beabstandeten Verdichtungsstreifen auf dem Boden, die breiter als die von den nachfolgenden Säscharen erzeugten Furchen sind.

Nach der Erfindung wird also der Boden nicht mehr gleichmässig über die gesamte Arbeitsbreite der Maschine hinweg verdichtet, sondern in selektiver Weise nur entlang von voneinander beabstandeten Verdichtungsstreifen, innerhalb welcher auf die Verdichtung folgend mit Hilfe der Säschare dann die Furchen für die Ablage des Saatgutes geschaffen werden. Auf diese Weise ist der Boden nur in der unmittelbaren Umgebung des Saatgutes verdichtet, so dass zwischen den Saatgutreihen der Boden für einen Abfluss des Wassers durchaus locker bleibt und somit dem Verschlämmen des Bodens entgegengewirkt wird. Insbesondere können nunmehr die Lockerungstiefe bei der vorauslaufenden Bodenbearbeitung, die Ablagetiefe bei der nachfolgenden Saat und deren Bodenbedeckungshöhe auseinanderfallen, so dass gerätespezifisch tief aufgelockert werden kann, anschliessend seichter gesät werden darf, weil unter dem Korn ein rückverdichteter kapillarer Damm bis hinunter zur festen nichtgelockerten Bodenschicht aufgebaut ist, und schliesslich, um die Auflaufenergie schwacher Keimlinge zu schonen, seicht zugedeckt werden darf, weil die Saatdeckenoberfläche in einer klimatisch geschützten Furchensenke liegt.

Hervorzuheben ist auch, dass sich die Erfindung nicht nur auf die Verdichtungswirkung, sondern auch durch einen Planiereffekt positiv auswirkt. Aufgrund der Selektivität bei der Bodenverdichtung werden Kluten besser zerdrückt, können Steine weggeschoben oder besser eingeebnet werden, ebenso wie Pflanzenreste. Dies wirkt sich auch auf eine gleichmässige Arbeitstiefe günstig aus, wobei die Gleichmässigkeit noch dadurch verbessert wird, dass die Schare aufgrund der durch die selektive Arbeitsweise erzielbaren höheren Verdichtung beim Eindringen der benachbarten Säschare in den Boden behindert, besonders dann, wenn mehrere Säscharenreihen hintereinander angeordnet sind.

Schliesslich kann das Gesamtgewicht bei der erfindungsgemässen Bestellmaschine wegen des selektiven Vorgehens bei der Bodenverdichtung aufgrund des dadurch möglichen leichteren Gewichtes der Bodenverdichtungsvorrichtung geringer als nach dem Stand der Technik sein.

Als Bodenverdichtungswerkzeuge können beispielsweise Kufen dienen. In der Mehrzahl der Fälle werden aber zweckmässigerweise Bodenverdichtungsreifen verwendet, die gemäss einer bevorzugten Ausführungsform der Erfindung auf einer Packerwalze angeordnet sind, um die mit der Packerwalze verbundenen bekannten Vorteile auch bei der Erfindung zu nutzen, insbesondere um die Kletterfähigkeit der Bodenverdichtungsvorrichtung zu verbessern.

Ein Blockieren der Bodenverdichtungsvorrichtung bei der Bestellmaschine nach der Erfindung wird besonders wirksam verhindert, wenn zwischen den Bodenverdichtungsreifen auf einem Kreisumfang angeordnete und nach aussen vorstehende Stacheln vorgesehen sind, die in den Boden greifen. Diese Stacheln haben ausserdem eine Lockerung des Bodens zwischen den Verdichtungsstreifen zur Folge, was natürlich erwünscht ist.

Vorteilhafterweise ist ferner an der Scharsävorrichtung eine auf alle Säschare zentral einwirkende Einstellvorrichtung vorgesehen, mit der alle Säschare gemeinsam quer zur Fahrtrichtung für ein fluchtendes Nachlaufen der Säschare hinter den Bodenverdichtungsreifen verstellbar sind. Bei fehlerhaften Fahr- und Wendemanövern im Feld ebenso wie unter den Dauerbelastungen während der Arbeit am Hang können nämlich Verformungen im Maschinengerüst auftreten, so dass die gewünschte Geometrie zwischen allen beteiligten Gerätebaugruppen gestört ist. Diese Verspannungen im Maschinenrahmen können nun leicht mit Hilfe der Einstellvorrichtung korrigiert werden.

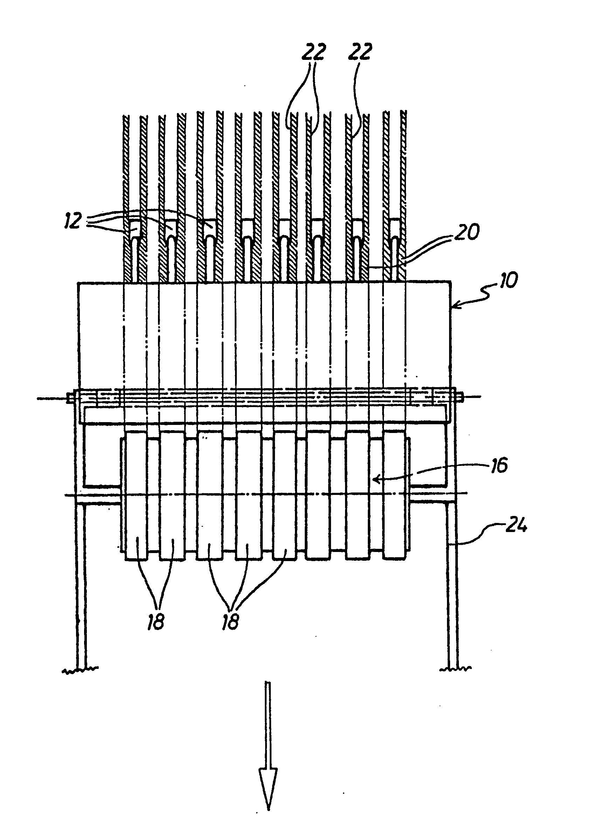

Weitere Vorteile, Einzelheiten und Merkmale der Erfindung ergeben sich aus der nachstehenden anhand der beiliegenden Zeichnung erfolgenden Beschreibung eines bevorzugten Ausführungsbeispiels:

Die in der Draufsicht schematisch dargestellte erfindungsgemässe Bestellmaschine weist einen Vorratsbehälter 10 mit einer Reihe von Säscharen 12 auf. Der Vorratsbehälter 10 ist auf einem Rahmen 24 abgestützt. In Fahrtrichtung vor der Sämaschine läuft wie gezeigt eine Bodenverdichtungswalze 16, die genauso viele Bodenverdichtungsreifen 18 auf ihrem Umfang aufweist, wie Säschare 12 vorhanden sind. Die Bodenverdichtungsreifen 18 fluchten in Laufrichtung mit den Säscharen 12 und erzeugen auf dem Boden streifenförmige Verdichtungen 20, die breiter als die von den Säscharen erzeugten Furchen 22 sind. Die mit der Bodenverdichtungswalze über den Rahmen 24 verbundene Sämaschine wird in an sich bekannter Weise von einem nicht gezeigten Schlepper in der durch den Pfeil angegebenen Richtung gezogen.

Anstelle der gezeigten Verdichtungswalze mit den erhabenen Reifen kann auch eine Packerwalze verwendet werden. Weiterhin ist es möglich, in den Zwischenräumen zwischen den Verdichtungsreifen auf der Walze über die Verdichtungsreifen vorstehende Stacheln vorzusehen.

**Patentansprüche**

1. Bestellmaschine mit einer Scharsävorrichtung mit mindestens einer Reihe nebeneinander angeordneter Säschare (12) und einer der Scharsävorrichtung vorlaufenden Bodenverdichtungsvorrichtung (16), dadurch gekennzeichnet, dass die Bodenverdichtungsvorrichtung (16) im Abstand der nachlaufenden Säschare (12) und mit diesen in Fahrtrichtung fluchtend angeordnete Bodenverdichtungswerkzeuge (18) aufweist zur Ausbildung von voneinander beabstandeten Verdichtungsstreifen (20) auf dem Boden, die breiter als die von den nachlaufenden Säscharen (12) erzeugten Furchen (22) sind.

2. Bestellmaschine nach Anspruch 1, dadurch gekennzeichnet, dass die Bodenverdichtungswerkzeuge auf einer gemeinsamen Achse geführte Bodenverdichtungsreifen (18) sind.

3. Bestellmaschine nach Anspruch 2, dadurch gekennzeichnet, dass die Bodenverdichtungsreifen (18) auf einer Packerwalze angeordnet sind.

4. Bestellmaschine nach Anspruch 2, dadurch gekennzeichnet, dass zwischen den Bodenverdichtungsreifen (18) auf einem Kreisumfang angeordnete und nach aussen vorstehende Stacheln vorgesehen sind.

5. Bestellmaschine nach einem der Ansprüche 1 bis 4, dadurch gekennzeichnet, dass an der Scharsävorrichtung eine auf alle Säschare zentral einwirkende Einstellvorrichtung vorgesehen ist, mit der alle Säschare gemeinsam quer zur Fahrtrichtung für ein fluchtendes Nachlaufen der Säschare hinter den Bodenverdichtungsreifen verstellbar sind.

**Claims**

1. Tilling machine with a share-type sowing device having at least one row of sowing shares (12) arranged next to one another and having a soil-tamping device (16), characterized in that the soil-tamping device (16) has soil-tamping tools (18) arranged according to the spacing of the following sowing shares (12) and in line with these in the direction of travel and intended for forming, on the ground, tamping strips (20) which are spaced from one another and which are wider than the furrows (22) made by the following sowing shares (12).

2. Tilling machine according to Claim 1, characterized in that the soil-tamping tools are soil-tamping tyres (18) guided on a common axle.

3. Tilling machine according to Claim 2, characterized in that the soil-tamping tyres (18) are arranged on a packer roller.

4. Tilling machine according to Claim 2, characterized in that between the soil-tamping tyres (18) there are spikes arranged on the periphery of a circle and projecting outwards.

5. Tilling machine according to one of Claims 1 to 4, characterized in that on the share-type sowing device there is an adjusting device which acts centrally on all the sowing shares and by means of which all the sowing shares are jointly adjustable transversely relative to the direction of travel for an aligned follow-up of the sowing shares behind the soil-tamping tyres.

**Revendications**

1. Cultivateur comportant un dispositif d'ensemencement avec au moins une série de socs de semoir (12) disposés les uns à côté des autres et un dispositif de compactage du sol (16) précédant le dispositif d'ensemencement, caractérisé en ce que le dispositif de compactage du sol (16) comporte à un certain intervalle de socs de semoir (12) et convergent avec ceux-ci dans le sens de la marche, des outils de compactage du sol (18) pour la formation sur le sol de bandes de compactage (20) séparées les unes des autres qui sont plus larges que les sillons (22) produits par les socs de semoir (12) les suivant.

2. Cultivateur selon la revendication 1, caractérisé en ce que les outils de compactage du sol sont des bandes de compactage (18) montées sur un axe commun.

3. Cultivateur selon la revendication 2, caractérisé en ce que les bandes de compactage du sol (18) sont placées sur un rouleau plein.

4. Cultivateur selon la revendication 2, caractérisé en ce que des points faisant saillies vers l'extérieur et disposées à la périphérie sont placées entre les bandes de compactage du sol (18).

5. Cultivateur selon l'une des revendications 1 à 4, caractérisé en ce que, sur le dispositif d'ensemencement à soc, est prévu un système de réglage agissant de façon centrale sur tous les socs, grâce auquel tous ceux-ci peuvent être réglés ensemble perpendiculairement au sens de la marche, pour une orientation convergente des socs de semoir à l'arrière des bandes de compactage du sol.